# EUROPÄISCHE PATENTANMELDUNG

(11) **EP 4 563 958 A1**
(43) Veröffentlichungstag der Anmeldung: **04.06.2025**
(21) Anmeldenummer: 24207270.0
(22) Anmeldetag: 17.10.2024
(51) Int. Cl.: G01K 7/42, G01K 13/02, G01N 33/18, G06Q 50/06, E03B 7/07

(54) **VORRICHTUNG ZUR BESTIMMUNG EINER TEMPERATUR EINER IN EINER ROHRLEITUNG GEFÜHRTEN FLÜSSIGKEIT**

(30) Priorität: 29.11.2023 CH 13312023
(71) Anmelder: R. Nussbaum AG, 4600 Olten 1 (CH)
(72) Erfinder: Zeiter, Patrik, 4853 Riken (CH); Bobst, Urs, 4703 Kestenholz (CH); Gerber, Dominic, 5036 Oberentfelden (CH); Nicoara, Angela, 4800 Zofingen (CH); Bättig, Martin, 8050 Zürich (CH); Tibo, Clausen, 4600 Olten (CH); Stechschulte, Gabriel, 6005 Luzern (CH)
(74) Vertreter: Keller Schneider Patent- und Markenanwälte AG

(57) **Zusammenfassung**

Eine Vorrichtung zur Bestimmung einer Temperatur einer in einer Rohrleitung (2) geführten Flüssigkeit, insbesondere von Trinkwasser, umfasst ein Temperatursensorelement (13) und eine Halterung (11) zur Anbringung an der Rohrleitung (2). An der Halterung (11) ist das Temperatursensorelement (13) derart befestigt, dass es bei an der Rohrleitung (2) angebrachter Halterung (11) eine Aussenfläche der Rohrleitung (2) kontaktiert, um Messdaten zur Aussentemperatur der Rohrleitung (2) zu gewinnen. Die Vorrichtung umfasst weiter eine Verarbeitungsanordnung (20) zum Empfang der Messdaten des Temperatursensorelements (13) und zur Ermittlung der Temperatur der in der Rohrleitung (2) geführten Flüssigkeit, wobei die Verarbeitungsanordnung (20) dazu eingerichtet ist, mithilfe eines Machine-Learning-Modells aus den Messdaten die Temperatur der Flüssigkeit zu bestimmen.

## Beschreibung

### Technisches Gebiet

Die Erfindung betrifft eine Vorrichtung und ein Verfahren zur Bestimmung einer Temperatur einer in einer Rohrleitung geführten Flüssigkeit, insbesondere von Trinkwasser. Sie betrifft weiter ein System zur Überwachung einer Temperatur einer in einem Rohrleitungssystem geführten Flüssigkeit, insbesondere von Trinkwasser.

### Stand der Technik

Systeme zur Versorgung von Gebäuden mit Kalt- und Warmwasser müssen verschiedensten Anforderungen genügen. Eine Kernanforderung ist die Gewährleistung der Trinkwasserhygiene. Diese ist unter anderem durch zu hohe Temperaturen in der Kaltwasserversorgung und durch zu tiefe Temperaturen in der Warmwasserversorgung gefährdet. Werden Sollbereiche für die Kalt- und Warmwassertemperatur nicht eingehalten, können sich zudem Komforteinbussen für die Benutzer ergeben.

Immer wichtiger wird auch die Energieeffizienz der Trinkwasser-Versorgungssysteme. Diese lässt sich steigern, indem Komponenten der Trinkwasserversorgung in intelligenter Weise mit weiteren haustechnischen Anlagen, z. B. Heizung/Lüftung/Klima, Beschattung und Anlagen zur lokalen Stromproduktion, zusammenwirken.

Die Erfüllung der erwähnten Anforderungen erfordert eine genaue Kenntnis des Zustands des Trinkwasser-Versorgungssystems und der funktionalen Zusammenhänge in diesem System. Gestützt auf entsprechende Parameter können weitergehende Informationen, z. B. Ergebniswerte und Steuerdaten, abgeleitet und zwischen Komponenten des Versorgungssystems und Drittsystemen ausgetauscht werden.

Wie erwähnt ist vor allem die Temperatur des Kalt- bzw. Warmwassers von grosser Bedeutung. Diese soll engmaschig erfasst und überwacht werden, was eine Reihe von Messstellen erfordert. Herkömmlich werden derartige Messungen mit Temperaturfühlern vorgenommen, die direkten Kontakt mit der Flüssigkeit haben. Die Installation solcher Fühler, insbesondere nachträglich, in einem bestehenden Leitungssystem, ist aufwendig. Zudem können sich aufgrund des Kontakts mit der Flüssigkeit über die Zeit Probleme ergeben, z. B. aufgrund von Korrosion oder der Ansammlung von Kalk.

### Darstellung der Erfindung

Aufgabe der Erfindung ist es, eine dem eingangs genannten technischen Gebiet zugehörende Vorrichtung zu schaffen, welche die engmaschige Erfassung und Überwachung von Wassertemperaturdaten vereinfacht und eine höhere Lebensdauer aufweist.

Die Lösung der Aufgabe ist durch die Merkmale des Anspruchs 1 definiert. Gemäss der Erfindung umfasst die Vorrichtung:
a) ein Temperatursensorelement;
b) eine Halterung zur Anbringung an der Rohrleitung, wobei an der Halterung das Temperatursensorelement derart befestigt ist, dass es bei an der Rohrleitung angebrachter Halterung eine Aussenfläche der Rohrleitung kontaktiert, um Messdaten zur Aussentemperatur der Rohrleitung zu gewinnen;
c) eine Verarbeitungsanordnung zum Empfang der Messdaten des Temperatursensorelements und zur Ermittlung der Temperatur der in der Rohrleitung geführten Flüssigkeit, wobei die Verarbeitungsanordnung dazu eingerichtet ist, mithilfe eines Machine-Learning-Modells aus den Messdaten die Temperatur der Flüssigkeit zu bestimmen.

Beim Temperatursensorelement handelt es sich um eine bekannte Komponente. Er basiert beispielsweise auf einem Element, das in Abhängigkeit seiner Temperatur den elektrischen Widerstand ändert (Resistance Temperature Detector, RTD). Durch Einbindung in einen Stromkreis lässt sich damit auf einfache Weise ein analoges Messsignal erhalten, das die Temperatur des Elements repräsentiert. Verwendet werden kann beispielsweise ein PT100-Messelement, ein Temperaturfühler, der ein Platinelement umfasst, dessen Nennwiderstand bei 0 °C 100 Ω beträgt.

Im an der Rohrleitung angebrachten Zustand der Halterung kontaktiert das Element oder ein mit dem Element wärmeleitungstechnisch verbundenes Element mit hoher Wärmeleitfähigkeit direkt die Aussenfläche der Rohrleitung, so dass das Element ohne nennenswerte Verzögerung jeweils die Temperatur der Rohraussenseite annimmt. Das Element ist - ausser im Kontaktabschnitt zur Rohraussenfläche - bevorzugt von einem thermisch isolierenden Material umschlossen. Damit können thermische Einflüsse der Umgebung minimiert werden - insbesondere nimmt die Rohraussentemperatur einen Wert an, der näher an der Temperatur der in einem Rohrleitungssystem geführten Flüssigkeit liegt als bei fehlender Isolation. Dies vereinfacht die Modellierung und macht die Vorhersagen genauer.

Bei der Aussenfläche der Rohrleitung kann es sich um den Aussenmantel eines Rohrs oder einer Armatur handeln, aber auch um einen anderen aussenseitigen, also nicht direkt mit der in der Rohrleitung geführten Flüssigkeit in Kontakt stehenden Wandabschnitt. Beispielsweise kann das Temperatursensorelement einen Wandabschnitt in einer (zum Medium hin verschlossenen) Aufnahmeöffnung für weitere Komponenten der Rohrleitung kontaktieren, z. B. einer Bohrung für Ventile, Stopfen o. ä.

Die Verarbeitungsanordnung umfasst insgesamt insbesondere einen A/D-Wandler zur Gewinnung digitaler Temperaturdaten aus dem analogen Messsignal des Temperatursensorelements, Elektronik zur Durchführung der Temperaturmessungen, Elektronik zur Ausführung des Machine-Learning-Modells, eine Schnittstelle zur Übermittlung von Ergebnissen sowie eine Stromversorgung für die Elektronik und gegebenenfalls die Schnittstelle. Diese Komponenten sind insbesondere auf einer gemeinsamen Leiterplatte (PCB) angeordnet. Die Leiterplatte mit den Komponenten kann mit dem Temperatursensorelement in einem gemeinsamen Gehäuse untergebracht sein, oder der Temperatursensor ist abgesetzt und wird mit den weiteren Komponenten über Kabel verbunden.

Grundsätzlich kann dieselbe Elektronik zur Durchführung der Temperaturmessungen und zur Ausführung des Machine-Learning-Modells eingesetzt werden. Vorzugsweise handelt es sich aber um separate Komponenten, die auch entfernt von einander angeordnet werden können, wie weiter unten diskutiert.

Geeignete A/D-Wandler sind ebenfalls verfügbar, z. B. der Typ MAX31865 der Analog Devices, Inc., Wilmington, Massachusetts, USA, der spezifisch an RTDs angepasst ist.

Zur Stromversorgung des Temperatursensors und lokaler Komponenten wird bevorzugt eine Batterie eingesetzt, z. B eine Lithium-Batterie. Besonders bevorzugt ist der Einsatz einer Lithium/Eisen-Disulfid-Batterie (LiFeS₂-Batterie). Damit wird bei energiesparender Konzeption ein Batteriewechsel erst nach ca. 20 Jahren notwendig. Es ist aber auch möglich, Elemente der Vorrichtung, insbesondere zentrale Elemente, die Daten mehrerer Temperatursensoren verarbeiten, vom Netz zu speisen.

Ein erfindungsgemässes Verfahren zur Bestimmung einer Temperatur einer in einer Rohrleitung geführten Flüssigkeit, insbesondere von Trinkwasser, umfasst folgende Schritte:
a) Gewinnen von Messdaten eines Temperatursensorelements, der eine Aussenfläche der Rohrleitung kontaktiert;
b) Empfangen der Messdaten des Temperatursensorelements in einer Verarbeitungsanordnung und
c) Ermitteln der Temperatur der in der Rohrleitung geführten Flüssigkeit aus den Messdaten, mithilfe eines Machine-Learning-Modells.

Die Vorrichtung und das Verfahren sind insbesondere zur Bestimmung der Temperatur von Trinkwasser in Kalt- und Warmwasser-Zuleitungen und -Zirkulationsleitungen von Wasserversorgungssystemen in Gebäuden geeignet.

Die Vorrichtung lässt sich einfach und kostengünstig montieren, weil sie keinen Eingriff in das Rohrleitungssystem oder gar den Austausch von Teilen desselben erfordert. Sie ist auch konstruktiv einfach und langlebig ausgebildet, weil sie keiner Abdichtung bedarf. Mit der Vorrichtung lassen sich schnell und einfach mehrere in einem Rohrleitungssystem verteilte Temperaturmessstellen realisieren. Die gewonnenen Temperaturdaten und ihr jeweiliger zeitlicher Verlauf können dann zur Gewinnung umfangreicher Informationen herangezogen werden. Entsprechende Verfahren sind in der Schweizer Patentanmeldung CH 1331/2023 «System zur Trinkwasserversorgung eines Gebäudes» der vorliegenden Anmelderin vom 29. November 2023 beschrieben. Sie dienen beispielsweise zur Erkennung der Anwesenheit von Personen in einem Gebäude, zum Aufspüren von Wasserlecks, zur Gewinnung von Durchflussinformationen oder zur automatischen Erkennung einer Topologie eines Rohrleitungsnetzes. Die Nutzung mehrerer Temperatursensoren ermöglicht durch einen Quervergleich auch die Erkennung von Fehlern beim Sensoreinsatz und schafft Redundanz.

Der Einsatz einer Mehrzahl von Temperatursensoren hat somit den Vorteil einer einfachen Installation, zudem ergibt sich eine geringere Fehleranfälligkeit des Gesamtsystems, weil mechanische Sensoren, die einer Abnutzung unterliegen oder deren Funktion durch Einflüsse wie Kalkablagerungen beeinträchtigt wird, vermieden werden können.

Ein erfindungsgemässes System zur Überwachung einer Temperatur einer in einem Rohrleitungssystem geführten Flüssigkeit, insbesondere von Trinkwasser, umfasst entsprechend mehrere erfindungsgemässe Vorrichtungen, die an beabstandeten Messpositionen am Rohrleitungssystem angeordnet sind, und eine zentrale Verarbeitungseinrichtung zur Verarbeitung von Werten der Temperatur der Flüssigkeit an den beabstandeten Messpositionen.

Das System stellt die Trinkwasserhygiene sicher, indem es verfolgt, ob Warm- und Kaltwasser innerhalb ihrer jeweiligen Grenzen bleiben, wie sie z. B. in den Schweizer Vorschriften SVGW-W3/E3, SIA 385/1 :2020 definiert sind, die mindestens 60°C am Kesselausgang, mindestens 55°C in der Warmwasserzirkulation und maximal 25°C in den Kaltwasserleitungen fordern. Das System kann so eingerichtet sein, dass Warnungen generiert werden, wenn sich eine Flüssigkeitstemperatur ausserhalb des entsprechenden Sollbereichs befindet. Die Messdaten können zudem aufgezeichnet und verfügbar gemacht werden, so dass ein Nachweis über das Einhalten der entsprechenden Vorschriften vorliegt. Beispielsweise kann auch in vorgegebenen zeitlichen Abständen automatisch ein digital signiertes Zertifikat generiert werden, das die Einhaltung der Vorschriften bestätigt.

Mit Vorteil umfasst die Halterung einen flexiblen Abschnitt, der im angebrachten Zustand die Rohrleitung zumindest teilweise umgreift.

Der flexible Abschnitt kann elastisch sein, so dass er zur Anbringung temporär verformt werden kann und nach dem Aufschieben auf die Rohrleitung aufgrund der Elastizität eine passend umschliessende Form annimmt. Er kann z. B. als flexible Manschette ausgebildet sein oder als Rollfeder. Der flexible Abschnitt kann aber auch mit Hilfe einer Spannvorrichtung um die Rohrleitung festgezogen werden, insbesondere in der Art einer Schlauchschelle oder mit Hilfe einer Zugfeder.

Der flexible Abschnitt kann auch durch eine Einlage eines flexiblen Materials (z. B. eines geschäumten Kautschukmaterials) gebildet sein, die in eine im Wesentlichen starre, öffen- und schliessbare zwei- oder mehrteilige Rohrschelle eingelegt ist und auf ihrer Innenseite die Rohraussenseite kontaktiert.

Weitere Befestigungsarten sind möglich, z. B. mithilfe von Magneten und/oder Klebstoffen. Grundsätzlich ist es auch möglich, die Halterung mittels einer Schraubverbindung an der Rohrleitung anzubringen. Insbesondere werden dazu unbenutzte Anschlüsse der Rohrleitung genutzt, die ansonsten durch eine Verschlusskappe verschlossen wäre. So kann z. B. ein Einschraubabschnitt der Halterung in ein vorhandenes Anschlussgewinde eines solchen unbenutzten Anschlusses eingeschraubt werden, um die Halterung am Rohr zu befestigen. Der Einschraubabschnitt übernimmt dabei u. a. die Funktion der Verschlusskappe, oder es ist alternativ ein Einsatz vorgesehen, der den unbenutzten Anschluss verschliesst und eine Befestigungsgeometrie (z. B. in Gewinde) zur Anbringung der Halterung bereitstellt.

Auch die Kontaktfläche des Temperatursensorelements kann durch ein in mindestens einer Richtung krümmbares und/oder elastisches Material (z. B. Kupfer) gebildet sein, so dass die Kontaktfläche auf ihrer gesamten Ausdehnung die Rohraussenseite kontaktiert.

Das aussenliegende Temperatursensorelement kann auch in eine sanitärtechnische Komponente integriert sein. Aktive Komponenten können direkt in Abhängigkeit der Messwerte des Temperatursensorelements betrieben werden. So kann beispielsweise ein elektronisch steuerbares Zirkulationsventil in Abhängigkeit der lokalen Temperaturdaten gesteuert werden, wobei im Zirkulationsventil auf die Messwerte eines integrierten Rohraussentemperatursensorelements abgestellt wird. Durch die entsprechende Beeinflussung der Zirkulationsmenge des Wassers in der Zirkulationsleitung wird sichergestellt, dass die hygienischen Standards eingehalten werden. Bevorzugt werden die Temperaturdaten zusätzlich einem zentralen System zur weiteren Verarbeitung zur Verfügung gestellt.

Ein Zirkulationsventil kann alternativ oder zusätzlich auch anhand von Flüssigkeitstemperaturwerten gesteuert werden, die von einem oder mehreren vom Zirkulationsventil unabhängigen erfindungsgemässen Temperatursensor(en) erhalten wurden.

Bei einer bevorzugten Ausführungsform weist die Vorrichtung eine erste Einheit zur Anbringung an der Rohrleitung auf, die das Temperatursensorelement und eine erste Schnittstelle zur Datenübermittlung umfasst und eine zweite, entfernt anordenbare, Einheit mit einer zweiten Schnittstelle zur Datenübermittlung und der Verarbeitungsanordnung. Dabei sind die erste Einheit und die zweite Einheit so eingerichtet, dass die Messdaten des Temperatursensorelements von der ersten Einheit zur zweiten Einheit übertragbar sind.

Die erste Einheit umfasst neben dem Temperatursensorelement und der ersten Schnittstelle insbesondere auch den A/D-Wandler zur Umwandlung des (analogen) Messsignals in digitale Daten, die übergreifende Steuerung zur Auslösung und Zwischenspeicherung von Messwerten und die Stromversorgung für den Wandler, die Steuerung und die erste Schnittstelle.

Bei der zweiten Einheit kann es sich um ein Gateway handeln, das Messwerte mehrerer erster Einheiten direkt von diesen empfängt, verarbeitet und weiterleitet. Bei der zweiten Einheit kann es sich aber auch um eine übergeordnete Komponente handeln, die Messwerte mehrerer erster Einheiten über dazwischengeschaltete Gateways empfängt, verarbeitet und zur Verfügung stellt (z. B. über eine API oder eine Benutzerschnittstelle) und/oder weiterleitet, z. B. einen Server.

Entsprechend kann die Verarbeitung der Messdaten mittels des Machine-Learning-Modells lokal (im Bereich des Temperatursensorelements), regional (durch ein Gateway) oder zentral (auf einem Server, gegebenenfalls angebunden an eine Cloud) erfolgen. Es sind auch gemischte Systeme denkbar. Die regionale oder zentrale Verarbeitung ist bevorzugt, weil sie auf Stufe der lokalen Geräte den Geräte- und Wartungsaufwand minimiert und Datenverarbeitungsressourcen effizienter nutzt als bei lokaler Verarbeitung.

In einer alternativen Ausführungsform sind alle Komponenten der Vorrichtung lokal an der Messstelle angeordnet, insbesondere in einem gemeinsamen Gehäuse. So wird der Integrationsaufwand minimiert, insbesondere dann, wenn nur eine einzige oder wenige Temperaturmessstellen benötigt werden.

Bevorzugt sind die erste Schnittstelle und die zweite Schnittstelle zur drahtlosen Datenübertragung eingerichtet, insbesondere in einem Netzwerk des Typs Long Range Wide Area Network (LoRaWAN).

Ein derartiges Netzwerk ist gut zur energieeffizienten Übermittlung von kleineren Datenpaketen innerhalb eines Gebäudes geeignet. Bei batteriebetriebenen Einrichtungen kann so die Batterielebensdauer maximiert werden.

Insbesondere grössere Gebäude können durch mehrere LoRaWAN-Netzwerke erschlossen sein. In diesen Fällen können Daten aus mehreren Netzwerken in einem zentralen, z. B. cloudbasierten, Server zusammengeführt und gemeinsam analysiert werden.

Alternativ oder zusätzlich können die Schnittstellen Daten über ein anderes drahtloses Netzwerk übermitteln. Konkrete Alternativen für die drahtlose Datenübertragung sind WLAN (insbesondere mittels des Protokolls Modbus/TCP Security) oder Thread (mittels Matter-Protokoll).

Wiederum alternativ oder zusätzlich können die Schnittstellen Daten kabelgebunden übermitteln, z. B. mittels Kupferkabel oder Ethernet. Es ist möglich, in demselben System sowohl drahtlose als auch kabelgebundene Übermittlungsstrecken einzusetzen, wobei die Wahl beispielsweise von Übertragungsbedingungen oder Zuverlässigkeitsanforderungen abhängig gemacht werden kann. Es können erste Einheiten vorgesehen sein, die lediglich über eine drahtlose Schnittstelle verfügen, aber auch solche mit lediglich einer Schnittstelle für die kabelgebundene Übermittlung und solche mit Schnittstellen beider Typen.

Analog dazu können im Rahmen eines Systems sowohl Komponenten (insbesondere Temperatursensoren) eingesetzt werden, die von einer integrierten Batterie mit elektrischer Energie versorgt werden, als auch Komponenten, die vom Netz über ein integriertes oder externes Netzgerät gespeist werden. Schliesslich können in demselben System parallel erfindungsgemässe Temperatursensoren mit Rohraussentemperaturmessung und herkömmliche «invasive» Temperatursensoren eingesetzt werden. Dies ermöglicht auch eine Validierung der Messwerte der auf der Rohraussentemperatur basierenden Sensoren und/oder eine Kalibrierung dieser Sensoren. Es wird so ein flexibler und modularer Aufbau des erfindungsgemässen Systems ermöglicht, der einen bedarfsgerechten Auf- und Zubau ermöglicht.

Bevorzugt handelt es sich beim Machine-Learning-Modell um ein Supervised-Machine-Learning-Modell. Besonders bevorzugt ist das Machine-Learning-Modell aus folgenden Typen ausgewählt:
a) ein baumbasiertes Modell;
b) ein lineares Modell;
c) ein neuronales Netz.

Als baumbasierte Modelle können insbesondere Random-Forest-Modelle und besonders die daraus entwickelten, verbesserten Modelle XGBoost und LightGBM eingesetzt werden. Sie lassen sich einfach implementieren, indem aus der eigentlichen Zeitreihe der Messungen zeitbezogene Merkmale generiert werden.

Als lineare Modelle kommen insbesondere ARIMA/ARMA- und Ordinary-Least-Squares-Modelle (OLS) in Frage. ARIMA (autoregressive Modelle mit gleitendem Durchschnitt) modellieren per se Zeitreihen und sind somit für die vorliegende Aufgabe ebenfalls gut geeignet. Im Rahmen von OLS können wiederum zeitbasierte Merkmale genutzt werden. OLS stellt ein besonders einfaches Modell dar, das geringe rechnerische Ressourcen erfordert. Weitere lineare Modelle, die an sich genutzt werden könnten, sind Kalman-Filter und Zustandsraum-Modelle.

Bei den neuronalen Netzen sind beispielsweise rekurrente neuronale Netze (recurrent neural networks, RNN), Long-short-term memory-Modelle (LSTM) oder Temporal Convolutional Networks (TCN) einsetzbar. Diese erfordern einen etwas grösseren Umsetzungsaufwand und rechnerische Ressourcen, sind aber in der Lage auch komplexe Zusammenhänge abzubilden.

Vergleiche zwischen den erwähnten Modellen haben ergeben, dass LightGBM besonders gute Ergebnisse liefert. Es handelt sich dabei um einen Gradient-Boosting-Entscheidungsbaum-Algorithmus. Dieser baut mehrere Entscheidungsbäume nacheinander auf, um die Restfehler der vorherigen Bäume zu minimieren. Der Prozess beginnt mit einem einfachen Modell und fügt iterativ neue Bäume hinzu, die die Residuen der bisherigen kombinierten Bäume vorhersagen. Jeder nachfolgende Baum wird trainiert, um die Fehler des bestehenden Ensembles zu korrigieren.

In allen diesen Fällen wird das Machine-Learning-Modell mit Trainingsdaten trainiert, die folgende Elemente (oder eine Teilmenge davon) umfassen:
Als Eingangsdaten:
- eine gemessene Temperatur an der Rohraussenseite (bzw. mehrere Temperaturen, wenn der Temperatursensor mehrere Sensoren umfasst);
- eine Zeitreihe solcher Temperaturmessungen, umfassend einen Zeitraum vor der Bestimmungszeit;
- Aussentemperaturmessungen an anderen Messstellen;-ein Wert für die Umgebungstemperatur am Messort (wenn der Temperatursensor zusätzlich einen Sensor für die Umgebungstemperatur umfasst oder wenn diese Umgebungstemperatur von einer externen Quelle verfügbar ist);
- ein Wert für die Luftfeuchtigkeit am Messort (der Sensor für die Luftfeuchtigkeit kann mit dem Sensor für die Temperatur bzw. den Sensoren für die Temperaturen in einer Baueinheit vereinigt sein oder von einer separaten Systemkomponente bezogen werden);
- ggf. Angaben zum Material (mit und ohne Dämmung) und/oder zur Geometrie des Rohrs.

Als Zieldatum: Die mittels eines im Rohr an der Messstelle angeordneten Sensors gemessene Medientemperatur.

Zum Trainieren des Modells wird bevorzugt eine Einrichtung eingesetzt, die einen Rohrleitungsabschnitt mit präzisen «invasiven» Temperatursensoren umfasst, sowie eine Einrichtung zum Bereitstellen von Wasser mit einem vorgegebenen Verlauf der Temperatur und der Durchflussmenge. Idealerweise können auch die Umgebungsbedingungen (z. B. Umgebungstemperatur und Luftfeuchtigkeit) eingestellt werden. So lässt sich das Modell schnell und effizient mit verschiedensten Szenarien trainieren.

Das Modell kann anhand von Daten mehrerer Anlagen, insbesondere solchen mit «invasiven» Temperatursensoren, laufend verbessert werden. Diese Daten werden insbesondere auf einem cloudbasierten Server gesammelt, bei Bedarf anonymisiert und in geeigneter Form als Trainingsdaten und/oder trainierte Modelle zur Verfügung gestellt.

Mit Vorteil ist die Verarbeitungsanordnung dazu eingerichtet, im Machine-Learning-Modell die Messdaten zu einem aktuellen Zeitpunkt und in einem dem aktuellen Zeitpunkt vorangegangenen Intervall zur Bestimmung der Temperatur der Flüssigkeit zum aktuellen Zeitpunkt zu verarbeiten.

Es hat sich gezeigt, dass der Temperaturverlauf in einem Zeitraum vorgängig des Messzeitpunkts wertvolle Informationen umfasst, die im Rahmen eines Machine-Learning-Modells die Abschätzung der aktuellen Temperatur der in der Rohrleitung geführten Flüssigkeit verbessert. Die Messdaten können direkt in das Machine-Learning-Modell einfliessen und/oder zur Gewinnung von abgeleiteten Daten, z. B. zeitlichen Ableitungen, genutzt werden, wie weiter unten beschrieben.

Vorzugsweise ist die Verarbeitungsanordnung dazu eingerichtet, die Messdaten in beabstandeten Messzeiträumen zu gewinnen und zu übermitteln, wobei ein Abstand der Messzeiträume mindestens 10 mal grösser ist als eine Dauer der Messzeiträume.

In einem Rohrleitungssystem, das Kalt- und Warmwasserleitungen umfasst, sind in den Leitungen keine sprunghaften Temperaturänderungen zu erwarten. Zur Überwachung der Trinkwasserhygiene genügen zudem zeitlich relativ grob aufgelöste Daten, z. B. Messwerte alle 30 Minuten. Auch mit einer solchen Auflösung werden bestehende Lösungen und Messprotokolle in Bezug auf die Häufigkeit der Temperaturerhebungen um ein Vielfaches übertroffen.

Für die Bestimmung einer aktuellen Temperatur des in der Rohrleitung geführten Wassers werden zudem nur Temperaturinformationen eines unmittelbar vorangehenden Zeitraums von z. B. 1 Minute benötigt. Entsprechend ist es in Bezug auf den Energiebedarf und die Menge der zu übermittelnden und weiter zu verarbeitenden Daten vorteilhaft, wenn die eigentlichen Messintervalle, in denen Temperaturmessungen erfolgen und weiter verarbeitet werden, relativ kurz sind (z. B. 20 s - 3 min), während sie zeitlich beabstandet ausgelöst werden (z. B. alle 5-60 min).

Die Auslösung der Messzeiträume kann auf unterschiedliche Weise erfolgen, z. B.
a) in einem fixen Zeitabstand;
b) in einem Zeitabstand, der dynamisch veränderbar ist, z. B. aufgrund der aus den Temperaturdaten aktuell zu gewinnenden Informationen, dem Verlauf der vorangehenden Temperaturwerte oder einem Verlässlichkeitswert einer letzten Messung (siehe unten);
c) nach Bedarf (Pull).

Die Varianten a)-c) lassen sich auch kombinieren.

Bevorzugt ist die Verarbeitungsanordnung dazu eingerichtet, innerhalb jedes Messzeitraums Messdaten des Temperatursensorelements und/oder abgeleitete Daten zu verarbeiten, die zeitlich ungleich im Messzeitraum verteilten Messungen entsprechen, wobei eine zeitliche Dichte der Messungen in einem dem aktuellen Zeitpunkt näherliegenden Abschnitt des Messzeitraums höher ist als in einem dem aktuellen Zeitpunkt fernerliegenden Abschnitt des Messzeitraums.

So lässt sich die Anzahl der zu verarbeitenden (und ggf. zu übertragenden) Messwerte reduzieren, ohne die Güte der Ergebnisse massgeblich zu beeinträchtigen: Zur aktuellen Situation liegen detaillierte Daten vor, während die früheren, weniger dicht erhobenen Werte eine Abschätzung längerfristiger Entwicklungen ermöglichen.

Bevorzugt ist die Verarbeitungsanordnung dazu eingerichtet, im Machine-Learning-Modell nebst Messdaten, die der Aussentemperatur der Rohrleitung entsprechen, auch abgeleitete Daten zu verarbeiten, die einer ersten zeitlichen Ableitung der Messdaten entsprechen.

Es hat sich gezeigt, dass diese abgeleiteten Daten zu einer verbesserten Abschätzung der Temperatur der in der Rohrleitung geführten Flüssigkeit durch ein Machine-Learning-Modell beitragen.

Mit Vorteil ist die Verarbeitungsanordnung dazu eingerichtet, im Machine-Learning-Modell zusätzlich abgeleitete Daten zu verarbeiten, die einer zweiten zeitlichen Ableitung der Messdaten entsprechen.

Es hat sich gezeigt, dass auch diese abgeleiteten Daten zu einer verbesserten Abschätzung der Temperatur der in der Rohrleitung geführten Flüssigkeit durch ein Machine-Learning-Modell beitragen.

Nebst den Werten der Aussentemperatur bzw. deren Ableitung(en) können insbesondere auch Durchschnittswerte oder andersartig weiter verarbeitete Werte als Eingangsdaten für das Machine-Learning-Modell verwendet werden. Dazu zählen beispielsweise auch Zeitdauern seit dem letzten lokalen Minimum, Maximum oder Wendepunkt im Temperaturverlauf, Masse dafür, wie lange sich die Temperatur bereits in dieselbe Richtung entwickelt hat.

Mit Vorteil umfasst die Vorrichtung ein weiteres Temperatursensorelement zur Gewinnung von Umgebungstemperatur-Messdaten, und die Verarbeitungsanordnung ist dazu eingerichtet, im Machine-Learning-Modell zusätzlich Messdaten des weiteren Temperatursensorelements zu verarbeiten.

Die Messdaten der Umgebungstemperatur ermöglichen eine systematische Berücksichtigung der Einflüsse der Umgebungstemperatur bei der Abschätzung der Temperatur der in der Rohrleitung geführten Flüssigkeit. So ist zu erwarten, dass sich eine Rohrleitung für Kaltwasser bei hoher Umgebungstemperatur durch die Einflüsse von aussen etwas erwärmt und bei gleicher Temperatur der Flüssigkeit eine höhere Temperatur annehmen wird als bei tiefer Umgebungstemperatur. Analog gilt dies für Warmwasserleitungen, wobei dort insbesondere bei tiefen Umgebungstemperaturen grössere Differenzen zwischen Flüssigkeits- und Rohraussentemperatur zu erwarten sind.

Das weitere Temperatursensorelement kann zusammen mit dem Temperatursensorelement an der Halterung oder in der ersten Einheit angeordnet sein. Er kann auch in einem Abstand gesondert angeordnet sein und seine Messsignale an die erste Einheit oder direkt an ein Gateway oder an einen Server übermitteln. Das weitere Temperatursensorelement kann auch Teil eines eigenständigen Systems zur Erfassung von Umgebungsparametern (z. B. Raumtemperatur, Luftfeuchtigkeit, CO2-Gehalt usw.) sein, und seine Daten kann über eine Programmierschnittstelle (API) erhalten werden. Ebenso können weitere dedizierte Umgebungssensoren, z. B. für die Luftfeuchtigkeit, vorgesehen sein, deren Messwerte ebenfalls für die Bestimmung der Flüssigkeitstemperatur herangezogen werden.

Bei bevorzugten Ausführungsformen ist die Verarbeitungsanordnung dazu eingerichtet, anhand der in einem ersten Zeitraum empfangenen Messdaten des Temperatursensorelements ein der Rohrleitung angepasstes Machine-Learning-Modell aus mindestens zwei Machine-Learning-Modellen auszuwählen und in einem zweiten Zeitraum das ausgewählte Machine-Learning-Modell zur Bestimmung der Temperatur der Flüssigkeit einzusetzen.

Bei den zwei Machine-Learning-Modellen kann es sich um Modelle desselben Typs (z. B LightGBM) handeln, die mit unterschiedlichen Trainingsdaten trainiert wurden und entsprechend unterschiedliche Parameter aufweisen, oder es handelt sich sogar um Modelle unterschiedlichen Typs.

Dadurch kann der Temperatursensor einfach am Leitungsrohr angebracht werden und bedarf keiner weiteren Konfiguration. Falsche Ergebnisse aufgrund einer unkorrekten oder nicht erfolgten manuellen Konfiguration können entsprechend vermieden werden.

Unterschiedliche Rohrleitungen können sich thermisch unterschiedlich verhalten. Versuche haben gezeigt, dass das unterschiedliche Verhalten insbesondere vom Material abhängig ist, das für die Wandung der Rohrleitung verwendet wurde. Besonders grosse Unterschiede ergeben sich zwischen Metall- und Kunststoffrohren. Somit kann es von Vorteil sein, wenn zwei Modelle bereitgestellt werden, je eines für Kunststoff- und für Metallrohre. Dies erhöht die Präzision der Vorhersage und vereinfacht die Modelle erheblich gegenüber einem Modell, das beide Fälle abdecken soll.

Nebst dem Material kann auch die Rohrgeometrie, insbesondere ein Verhältnis zwischen Wanddicke und Querschnitt bzw. Innendurchmesser, relevant sein. Grundsätzlich können sich auch unterschiedliche Zwecke der Rohrleitungen, z. B. ob Kalt- oder Warmwasser geführt wird, auf die Charakteristik des Verhältnisses zwischen Rohraussentemperatur und Flüssigkeitstemperatur auswirken. Dasselbe gilt für die Dämmung des Rohrabschnitts (sofern vorhanden). Somit können auch mehr als zwei Modelle bereitgehalten werden, z. B. vier für Kaltwasser-Metall, Kaltwasser-Kunststoff, Warmwasser-Metall, Warmwasser-Kunststoff. Zwischen diesen Modellen wird auf Basis der im ersten Zeitraum empfangenen Messdaten ausgewählt.

Je nach Anzahl Modelle und Unterscheidungscharakteristika kann der erste Zeitraum unterschiedlich lang gewählt werden. Wichtig ist, dass im ersten Zeitraum mehrere grössere Temperaturänderungen des im Rohr geführten Mediums stattfinden, da sich die wesentlichen Informationen zum Rohrmaterial aus der Reaktion der Aussentemperatur auf diese Temperaturänderungen ergeben. In der Regel dürfte ein Zeitraum von 24-72h ausreichend sein. Eine erneute Modellerkennung kann bevorzugt manuell ausgelöst werden, z. B. nach der Positionierung der Vorrichtung an einer anderen Rohrleitung. Es kann auch ein Sensor, z. B. ein Tastsensor, vorgesehen sein, der eine automatische Erkennung des Entfernens und Anbringens des Temperatursensors von bzw. an eine Rohrleitung ermöglicht, wobei eine erneute automatische Modellauswahl nach dem Wiederanbringen erfolgt. Eine neue Platzierung eines Sensors kann auch anhand der erfassten Daten, im Rahmen einer Plausibilitätsprüfung automatisch erkannt werden.

Die automatische Auswahl des Modells kann wiederum mit Hilfe eines Machine-Learning-Modells erfolgen, das eine Klassierung der Rohrleitung anhand der verarbeiteten Daten vornimmt. Bevorzugt wird die Auswahl mit Hilfe eines künstlichen neuronalen Netzwerks getroffen, insbesondere eines Convolutional Neural Networks (CNN). Dessen Eingangsdaten umfassen insbesondere eine Zeitreihe von Messwerten der Rohraussentemperatur und bevorzugt auch die Werte derm ersten zeitlichen Ableitung dieser Zeitreihe. Dessen Ausgabe stellt insbesondere eine Zuordnung zu einer Rohrklasse (Material, evtl. weitere Parameterbereiche) dar.

Da die Zeitreihen eine grosse Zahl an Werten umfassen und da charakteristische Muster, die letztlich für die Zuordnung zu einer Rohrklasse entscheidend sind, an einer beliebigen Stelle in der Zeitreihe auftreten können, werden eine hohe Anzahl von Schichten und/oder ein grosser Kernel benötigt.

Dies führt ohne weitere Massnahmen zu einer Vielzahl von freien Modellparametern, was die Ausbildung des Modells erschwert und zu einer Überanpassung führen kann. Um die Komplexität des Modells zu reduzieren, ohne sein rezeptives Feld zu verkleinern, werden bevorzugt Kernel mit Dilatation verwendet. Solche Kernel überspringen bestimmte Elemente und hinterlassen Lücken. Dadurch kann ein Kernel denselben Bereich mit weniger Parametern abdecken. Damit trotz der Lücken eine vollständige Berücksichtigung der Eingangsdaten erreicht wird, wird die Dilatation in verschiedenen Schichten vorzugsweise unterschiedlich gewählt.

Die Auswahl des Modells kann einstufig oder mehrstufig erfolgen. Bei einer mehrstufigen Auswahl wird die Rohrleitung zunächst einer Oberklasse (z. B. Metallrohr / Kunststoffrohr) zugeordnet. In einer zweiten Stufe erfolgt dann eine verfeinerte Zuordnung, z. B. zu spezifischen Materialien, Rohrdicken oder Wandstärken. Grundsätzlich sind auch mehr als zwei Stufen möglich.

Das Machine-Learning-Modell liefert nebst der Klassierung bevorzugt auch einen Wert für die Konfidenz der Zuordnung. Diese kann für eine Filterung des Ergebnisses herangezogen werden und/oder für die Entscheidung, ob der Messzeitraum für die Modellauswahl beendet und die endgültige Zuordnung vorgenommen werden kann oder ob weitere Messergebnisse benötigt werden.

Statt mit einem Machine-Learning-Modell kann die automatische Auswahl des Modells aber auch anhand eines deterministischen Algorithmus erfolgen, z. B. durch Vergleich der Temperaturwerte und abgeleiteter Grössen mit Schwellenwerten. Die beiden Ansätze können auch kombiniert werden, z. B. der Vergleich mit Schwellenwerten zur Unterscheidung zwischen Kalt- und Warmwasserleitungen und der Machine-Learning-Klassifizierer zur Unterscheidung zwischen Metall- und Kunststoffrohren.

In einem System, das mehrere Temperatursensoren umfasst, können Messwerte weiterer Sensoren und/oder eine bereits erfolgte Klassifikation einer Rohrleitung bei einem anderen Sensor ebenfalls zur Wahl des im Betrieb zu verwendenden Modells herangezogen werden.

Mit Vorteil wird eine erste Datenübertragungsrate im ersten Zeitraum anders gewählt, insbesondere höher, als eine zweite Datenübertragungsrate im zweiten Zeitraum. So kann die Entscheidung über das zu verwendende Modell auf Basis von zeitlich hoch aufgelösten Daten erfolgen, während im zweiten Zeitraum, im eigentlichen Betrieb, das Datenaufkommen und der Energiebedarf minimiert werden können. Da der erste Zeitraum über die Lebensdauer der Vorrichtung gesehen nicht ins Gewicht fällt, ist das höhere Datenaufkommen und der höhere Energiebedarf in diesem Intervall nicht kritisch.

In einer bevorzugten Ausführungsform werden die Temperaturmesswerte lokal gefiltert, um die Anzahl der zu übermittelnden Daten zu reduzieren. Insbesondere werden die Daten anhand der Änderungsrate der Rohraussentemperatur gefiltert; beispielsweise werden nur Messwerte aus Zeitfenstern übermittelt, die grossen Temperaturänderungen entsprechen. Beispielsweise werden die Messwerte während einer gewissen vorgegebenen Zeitdauer gepuffert. Wird eine Änderungsrate festgestellt, die eine vorgegebene Schwelle überschreitet, werden zunächst die Messwerte im Puffer bzw. aus einem vorgegebenen Zeitintervall in der unmittelbaren Vergangenheit übermittelt. Die Übermittlung dauert an, bis während einer vorgegebenen Zeitdauer keine Änderungsrate über der Schwelle (oder einer zweiten Schwelle) mehr festgestellt werden konnte. Alternativ wird während der Erkennungsphase die zeitliche Auflösung dynamisch erhöht und reduziert, in Abhängigkeit von der Änderungsrate der Rohraussentemperatur, d. h. in Phasen mit geringer Änderungsrate werden nur wenige Messwerte, in grösserem zeitlichen Abstand, übermittelt, während die Auflösung in Phasen mit höherer Änderungsrate erhöht wird. Wird ein Machine-Learning-Modell verwendet, fliesst die jeweilige zeitliche Auflösung dann als weiterer Parameter in das Training des Modells ein.

Alternativ wird das Modell in Abhängigkeit von eingespeisten Informationen ausgewählt. Die entsprechenden Angaben zum Material bzw. zur Geometrie des Rohrs können manuell für die einzelne Messstelle, den Leitungsabschnitt oder das gesamte Leitungsnetz eingespeist werden, z. B. über ein mit einem Gateway verbundenes Endgerät oder ausgehend von der Cloudplattform.

Bei einer bevorzugten Ausführungsform ist die Verarbeitungsanordnung dazu eingerichtet, anhand einer Änderungsrate der Aussentemperatur der Rohrleitung ein Mass für die Verlässlichkeit der bestimmten Temperatur der Flüssigkeit zu ermitteln, wobei insbesondere neue Werte für die Temperatur der Flüssigkeit nur ausgegeben oder weitergegeben werden, wenn das Mass der Verlässlichkeit einen unteren Schwellenwert übersteigt. Damit wird verhindert, dass wenig verlässliche Messwerte ausgegeben werden, die zu einer Fehlreaktion führen könnten.

Es hat sich gezeigt, dass bei der Temperaturüberwachung von Rohrleitungen in TrinkwasserSystemen die Abschätzung der Flüssigkeitstemperatur anhand der Aussentemperatur während kurzer Phasen schwierig ist, z. B. während eines kurz andauernden Wasserbezugs nach längerer Inaktivität. Wenn nun eine Messung genau während einer solchen kurzen Phase erfolgt und der entsprechend bestimmte Wert der Wassertemperatur bis zum nächsten Messzeitraum (also z. B. während 30 Minuten) als gültiger Wert angesehen wird, kann dies ein falsches Bild über die Temperatursituation an der Messstelle vermitteln. Es ist in diesem Fall sicherer, den früher bestimmten Wert vorerst beizubehalten, bis wieder ein verlässlicher Wert vorliegt. Als Kriterium für die Ausgabe von neuen Werten für die Temperatur der Flüssigkeit kann daher auch die Änderungsrate der Aussentemperatur eingesetzt werden. Neue Werte werden nur ausgegeben, wenn diese Änderungsrate unterhalb einer oberen Grenze liegt.

Mit Vorteil wird ein Zeitpunkt eines nächsten Messzeitraums angepasst, wenn das Mass für die Verlässlichkeit den unteren Schwellenwert unterschreitet. (Analog dazu kann der Zeitpunkt eines nächsten Messzeitraums angepasst werden, wenn die Änderungsrate der Aussentemperatur die erwähnte obere Grenze überschreitet.)

Dadurch wird der Zeitraum, in dem keine aktuellen Werte für die Temperatur der Flüssigkeit vorliegen, minimiert. Beispielsweise wird der nächste Messzeitraum in einem vorgegebenen zeitlichen Abstand angesetzt, wobei der vorgegebene Abstand einer üblichen Dauer einer Periode mit erheblichen Abweichungen entspricht.

Aus der nachfolgenden Detailbeschreibung und der Gesamtheit der Patentansprüche ergeben sich weitere vorteilhafte Ausführungsformen und Merkmalskombinationen der Erfindung.

### Kurze Beschreibung der Zeichnungen

Die zur Erläuterung des Ausführungsbeispiels verwendeten Zeichnungen zeigen:
- Fig. 1: eine schematische Darstellung eines Rohrleitungssystems mit einer Ausführungsform eines erfindungsgemässen Systems zur Überwachung der Temperatur der im Rohrleitungssystem geführten Flüssigkeit;
- Fig. 2: eine schematische Darstellung eines Temperatursensors und eines Gateways des erfindungsgemässen Systems;
- Fig. 3: ein erstes Beispiel eines Verlaufs der Rohraussentemperatur und der Flüssigkeitstemperatur an einer Stelle des Rohrleitungssystems;
- Fig. 4: der Verlauf der zeitlichen Ableitung und der Differenz der Rohraussentemperatur und der Flüssigkeitstemperatur;
- Fig. 5A, B: Darstellungen berücksichtigter Daten zur Bestimmung der Flüssigkeitstemperatur aus der Rohraussentemperatur; und
- Fig. 6: ein zweites Beispiel eines Verlaufs der Rohraussentemperatur und der Flüssigkeitstemperatur an einer Stelle des Rohrleitungssystems, wobei Abschnitte mit geringer Vorhersagegenauigkeit markiert sind.

Grundsätzlich sind in den Figuren gleiche Teile mit gleichen Bezugszeichen versehen.

### Wege zur Ausführung der Erfindung

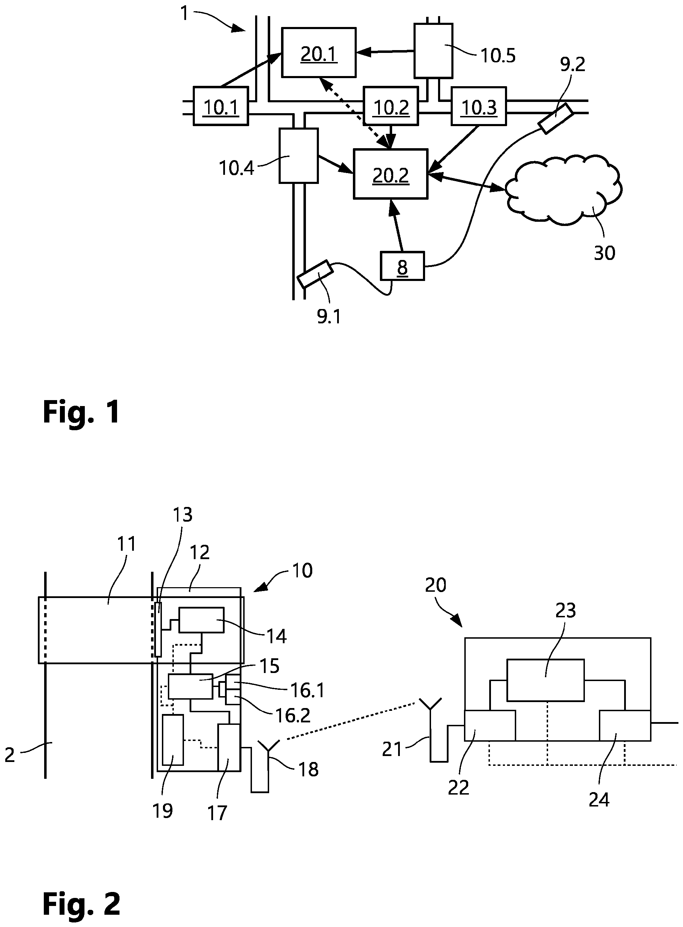

Die Figur 1 ist eine schematische Darstellung eines Rohrleitungssystems mit einer Ausführungsform eines erfindungsgemässen Systems zur Überwachung der Temperatur der im Rohrleitungssystem geführten Flüssigkeit.

Das Rohrleitungssystem 1, das in der Figur 1 nur abschnittsweise dargestellt ist, umfasst mehrere Abschnitte und Verzweigungen. Es kann grundsätzlich verschiedene Rohrtypen mit Rohrdurchmessern DN15-108 aus Inox, PB, PEx, PE-RT oder Verbundrohr umfassen. Das System ist nur schematisch dargestellt und vorliegend nicht unmittelbar relevante Komponenten wie z. B. Absperrventile sind nicht abgebildet. Am Rohrleitungssystem 1 sind mehrere Temperatursensoren angeordnet, darunter 5 erfindungsgemässe Temperatursensoren 10.1, ..., 10.5, die auf Messdaten der Rohraussentemperatur basieren und 2 an sich bekannte Temperatursensoren 9.1, 9.2, die einen Messfühler innerhalb der Rohrleitung aufweisen.

Bei den an sich bekannten Temperatursensoren 9.1, 9.2 handelt es sich um Komponenten, die in Anschlüsse in der Rohrleitung eingeschraubt werden können. Im Handel sind beispielsweise derartige Sensoren verfügbar, die über ein 1/4-Zoll-Aussengewinde verfügen und in eine entsprechende Aufnahme in einem Leitungselement einschraubbar sind. Bei den Leitungselementen kann es sich um Zwischenstücke, manuell oder motorisch betätigbare Ventile oder komplexere Einrichtungen wie z. B. Boiler handeln. Die Temperatursensoren 9.1, 9.2 verfügen über je zwei Kabel, mittels welchen sie mit einem Hub 8 verbunden sind. Der Hub 8 verfügt über mehrere Eingänge, je einen A/D-Wandler pro Kanal, einen Mikrocontroller zur Steuerung und eine Kommunikationsschnittstelle.

Zwei der erfindungsgemässen Temperatursensoren 10.1, 10.5 sind drahtlos, über ein LoRaWAN-Netzwerk, mit einem Gateway 20.1 verbunden. Die drei weiteren erfindungsgemässen Temperatursensoren 10.2, 10.3, 10.4 sowie der Hub 8 sind ebenfalls über ein LoRaWAN-Netzwerk, mit einem weiteren Gateway 20.2 verbunden. Die beiden Gateways 20.1, 20.2 sind über ein WLAN-Netzwerk und das Internet mit einer Cloud 30 verbunden. Die beiden Gateways 20.1, 20.2 können bei Bedarf auch direkt miteinander kommunizieren, z. B. zu Einrichtungs- oder Wartungszwecken. Insgesamt bilden die erfindungsgemässen Temperatursensoren 10.1...5, der Hub 8, die Gateways 20.1, 20.2 und die Cloud 30 ein End-to-End Edge-to-Cloud-System.

Die Figur 2 ist eine schematische Darstellung eines Temperatursensors und eines Gateways des erfindungsgemässen Systems. Der Temperatursensor 10 ist mittels einer Halterung 11 auf einem Leitungsrohr 2 des Rohrleitungssystems an einer Stelle festgeklemmt, wo die Temperatur des im Leitungsrohr 2 geführten Mediums überwacht werden soll. Die Halterung 11 ist dabei bei diesem Ausführungsbeispiel als Klemmschelle ausgebildet.

An der Halterung 11 ist das Gehäuse 12 des Temperatursensors 10 befestigt. Im Gehäuse 12 ist eine Leiterplatte (PCB) aufgenommen. Diese trägt ein Sensorelement 13, das durch eine Öffnung im Gehäuse 12 direkt die Aussenseite des Leitungsrohrs 2 kontaktiert. Zwischen dem Sensorelement 13 und der Aussenseite des Leitungsrohrs 2 kann zum Erzielen einer besseren Wärmeübertragung thermische Kontaktpaste angeordnet sein. Beim Sensorelement 13 handelt sich um einen im Handel erhältlichen PT100-Widerstandstemperatursensor (RTD). Das Sensorelement 13 ist mit einem A/D-Wandler 14 des Typs MAX31865 verbunden, der die analogen Signale des Sensorelements 13 in digitale Werte umwandelt. Diese Werte werden an die CPU 15 übertragen. Bei dieser handelt es sich um einen Chip des Typs Espressif ESP32-S3. Sie empfängt ebenfalls Daten von einem Umgebungstemperatursensor 16.1 und einem Luftfeuchtigkeitssensor 16.2.

Die CPU 15 ist mit einer Schnittstelle 17 verbunden, die sowohl einen drahtlosen als auch einen kabelgebundenen Austausch von Daten ermöglicht. Zu diesem Zweck umfasst die Schnittstelle 17 einen Chip des Typs Semtex SX1276 zum Datenaustausch über LoRaWAN (868 MHz LPWA) und eine Ethernet-Schnittstelle des Typs WIZnet 550io. Zum drahtlosen Austausch ist am Gehäuse 12 eine mit der Schnittstelle 17 verbundene Antenne 18 angeordnet. Verwendet wird im Rahmen des Ausführungsbeispiels eine Antenne des Typs NT-868-NUB-ccc.

Im Gehäuse 12 ist weiter eine Batterie 19 aufgenommen. Es handelt sich dabei um eine Lithium/Eisen-Disulfid-Batterie (LiFeS₂-Batterie). Diese ermöglicht eine Betriebsdauer von bis zu 20 Jahren ohne Batteriewechsel. Der Temperatursensor 10 umfasst aber auch eine DC-Buchse zur kabelgebundenen Stromversorgung (nicht dargestellt).

Der Temperatursensor 10 ist im dargestellten Ausführungsbeispiel via LoRaWAN drahtlos mit einem Gateway 20 verbunden, es ist aber auch eine drahtgebundene Anbindung via Ethernet (Modbus/TCP Security) möglich.

Das Gateway 20 umfasst dazu eine erste Schnittstelle 22, die zum einen mit einer Antenne 21 zur Kommunikation über LoRaWAN verbunden ist und die zum anderen ein Ethernet-Schnittstellenmodul aufweist. Das Gateway 20 umfasst weiter eine CPU 23, wiederum des Typs Espressif ESP32-S3. Über eine zweite Schnittstelle 24 können Daten über WLAN mit einer Cloud ausgetauscht werden (vgl. Fig. 1).

Der Temperatursensor 10 speichert den aktuell erfassten Temperaturwert als 16-Bit-Ganzzahl ohne Vorzeichen in 1/100 °C. Bei einer Kommunikation über Ethernet (Modbus-TCP) ist das Gateway 20 der Client und liest die Daten vom Temperatursensor 10, der als Server fungiert. Der Temperatursensor 10 speichert dabei den aktuell erfassten Temperaturwert im Modbus-Register 1, das er in einem regelmäßigen Intervall (10 Hz) aktualisiert. Bei einer Kommunikation über LoRaWAN bildet der Temperatursensor 10 den Client und die Gateway 20 den Server Der Nutzdateninhalt pro Übertragung beträgt ca. 20 bytes.

Auf dem Gateway 20 wird dann - wie unten beschrieben - aus den empfangenen Werten der Rohraussentemperatur die Flüssigkeitstemperatur an der Position des Temperatursensors 10 bestimmt. Die resultierenden Informationen werden dann an die Cloud weitergeleitet, wo sie genutzt und weiterverarbeitet werden können (Darstellung in intelligenten Dashboards, Benachrichtigungen, Empfehlungen, Alarme usw.).

Die Verbindung der einzelnen Geräte (Temperatursensoren und Gateways) einem bestimmten Automatisierungssystem (mit einer oder mehreren Gateways) wird über einen auf dem jeweiligen Gerät aufgedruckten QR-Code hergestellt. Der Installateur scannt diesen QR-Code bei der Installation mit einem mobilen Endgerät (z. B. Smartphone). Dadurch wird das Gerät logisch zu einem bestimmten Automatisierungssystem hinzugefügt. Es ist dabei bei der Installation eines Temperatursensors nicht notwendig, dass das jeweilige Gateway bereits vorhanden ist. Diese kann auch zu einem späteren Zeitpunkt hinzugefügt werden. Umgekehrt ist es auch möglich, weitere Temperatursensoren zu einem bestehenden Gateway nachträglich hinzuzufügen.

Die Verbindung zwischen einem Temperatursensor 10 und einem Gateway 20 wird automatisch hergestellt, sobald beide Teil desselben Automatisierungssystems und aktiv sind.

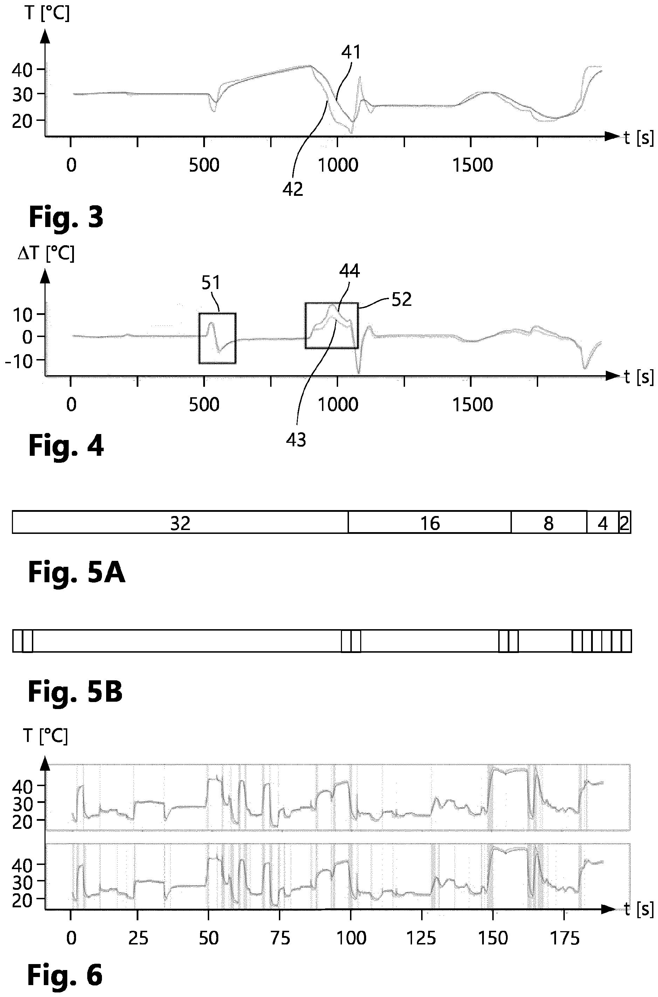

Die Figur 3 zeigt ein erstes Beispiel eines zeitlichen Verlaufs der Rohraussentemperatur 41 und der Flüssigkeitstemperatur 42 an einer Stelle des Rohrleitungssystems. Daraus ergibt sich, dass die Rohraussentemperatur 41 der tatsächlichen Flüssigkeitstemperatur 42 sehr nahe kommt. Der Unterschied besteht darin, dass die Rohraussentemperatur 41 in der Regel hinterherhinkt und die Temperaturänderungen in den Daten der Rohraussentemperatur 41 langsamer sind.

Die Figur4 zeigt den zeitlichen Verlauf der zeitlichen Ableitung 43 der Rohraussentemperatur 41 und der Differenz 44 der Rohraussentemperatur 41 und der Flüssigkeitstemperatur 42. Die Ableitung 43 ist dabei so skaliert, dass sie im ersten hervorgehobenen Bereich 51 der Differenz 44 entspricht. Im zweiten hervorgehobenen Bereich 52 stimmt die Ableitung 43 quantitativ nicht mehr mit der Differenz 44 überein, aber die Korrelation bleibt weiterhin sichtbar.

Dass die Ableitung 43 eine hohe Korrelation mit dem Unterschied zwischen der Eingangsgrösse (Rohraussentemperatur) und der Zielgrösse (Flüssigkeitstemperatur) aufweist, kann bei der Bestimmung der Zielgrösse aus der Eingangsgrösse ausgenutzt werden. Es werden deshalb im Rahmen des verwendeten Modells auch zeitliche Ableitungen der Rohraussentemperatur herangezogen. Dadurch wird die Stationarität erhöht und die Korrelation zwischen aufeinanderfolgenden Zeitschritten wird verringert.

Um störende Einflüsse der Eingangsdaten zu reduzieren, werden folgende Massnahmen getroffen:
- Ausreisser der Rohraussentemperatur, also singuläre Messungen mit abweichenden Werten im Vergleich zu den Nachbarmessungen, werden mittels Down-Sampling unter Verwendung von Medianwerten über jeweilige Fenster eliminiert.
- Der Einfluss des Rauschens in den Eingabedaten wird in Bezug auf die Berechnungen der Ableitungen reduziert, indem für die Ableitungen ausreichend grosse zeitliche Abstände verwendet werden.

Beide Massnahmen können mit geringem rechnerischen Aufwand und damit auch geringem Energiebedarf direkt im Temperatursensor umgesetzt werden.

Die Berechnung der Flüssigkeitstemperatur aus den Eingangsdaten erfolgt mit Hilfe eines Supervised-Machine-Learning-Modells im Gateway 20. Dazu wurden zunächst Zeitreihen von Wertepaaren von Rohraussentemperaturen und (invasiv gemessenen) Flüssigkeitstemperaturen gewonnen. Dazu wurde eine Anlage eingesetzt, die diejenigen Temperaturänderungen reproduziert, denen ein Leitungsrohr einer Wasserversorgung in einem Gebäude ausgesetzt sein kann. In der Anlage werden zwei Wasserströme (kalt und heiss) zum Erhalt von Wasser vorgegebener Temperaturen gemischt, und das Wasser wird mit verschiedenen zeitlichen Durchflussprofilen durch Rohre geleitet, wo die erwähnten Temperaturen gemessen werden. Ergänzend können auch die Umgebungstemperatur und die Luftfeuchtigkeit im Messbereich beeinflusst werden. Die Daten werden zudem für verschiedene Rohrtypen (z. B. Kunststoffrohre: PE-Xc, PB, PE-RT D16; Metallrohre: Edelstahl D15-42) aufgenommen.

Mit diesen Zeitreihen wird das Supervised-Machine-Learning-Modell dann trainiert. Für das Training werden die Datensätze auf 1 Hz neu abgetastet.

Versuche haben gezeigt, dass baumbasierte Methoden, namentlich Modelle des Typs LightGBM, sehr gute Eigenschaften aufweisen. LightGBM ist ein Gradient-Boosting-Entscheidungsbaum-Algorithmus. Ein solcher Algorithmus baut mehrere Entscheidungsbäume nacheinander auf, um die Restfehler der vorherigen Bäume zu minimieren. Der Prozess beginnt mit einem einfachen Modell und fügt iterativ neue Bäume hinzu, die die Residuen der bisherigen kombinierten Bäume vorhersagen. Jeder nachfolgende Baum wird trainiert, um die Fehler des bestehenden Ensembles zu korrigieren.

Bei der Definition des Modells wurde darauf geachtet, dass die Anzahl benötigter Datenpunkte und damit insbesondere der Energiebedarf beim Temperatursensor möglichst minimiert werden konnten. Schliesslich wird ein Modell verwendet, das zur Abschätzung einer Flüssigkeitstemperatur zu einem vorgegebenen Zeitpunkt folgende Eingangsdaten verwendet, vgl. Figuren 5A, 5B:
- aktuelle Rohrtemperatur;
- 1. Ableitung der Rohrtemperatur;
- 2. Ableitung der Rohrtemperatur;
- Durchschnitt der 1. und 2. Ableitung über die letzten 2 Sekunden;
- Durchschnitt der 1. und 2. Ableitung über 4 Sekunden, 2 Sekunden in der Vergangenheit;
- Durchschnitt der 1. und 2. Ableitung über 8 Sekunden, 4 Sekunden in der Vergangenheit;
- Durchschnitt der 1. und 2. Ableitung über 16 Sekunden, 11 Sekunden in der Vergangenheit;
- Durchschnitt der 1. und 2. Ableitung über 32 Sekunden, 26 Sekunden in der Vergangenheit.

Dabei benötigt die Berechnung der 2. Ableitung jeweils drei aufeinanderfolgende Stichproben (im Abstand von je 1 s). Dabei wurden jeweils nur der erste und letzte Wert jedes Fensters zur Berechnung der Mittelwerte verwendet. Insgesamt benötigt das Modell 16 Stichproben über einen Zeitraum von 1 Minute (vgl. Fig. 5B).

Das Modell liefert zu den meisten Zeitpunkten recht genaue Vorhersagen der Flüssigkeitstemperatur. In kurzen Zeitabschnitten, mit schnellen Temperaturveränderungen der Flüssigkeit, ergeben sich aber Abweichungen. Die Figur 6 zeigt ein zweites Beispiel eines Verlaufs der Rohraussentemperatur und der Flüssigkeitstemperatur an einer Stelle des Rohrleitungssystems, wobei Abschnitte mit geringer Vorhersagegenauigkeit markiert sind.

Da im Anwendungsfall die Genauigkeit Vorrang vor der Verfügbarkeit hat, kann ein kurzer Zeitraum ohne aktuelle Vorhersage toleriert werden - er ist einer falschen Vorhersage, die gegebenenfalls zu unnötigen oder kontraproduktiven Massnahmen führt - vorzuziehen. Im Rahmen des beschriebenen Verfahrens werden somit in Zeiträumen, in denen die Änderungsrate der Rohraussentemperatur über einem bestimmten Schwellenwert liegt, keine neuen Vorhersagen erzeugt. Es hat sich gezeigt, dass ein Schwellenwert von 0,05 ein gutes Gleichgewicht zwischen betroffenen Zeitintervallen und der verbleibenden Falsch-Positiv-Rate bietet: die Anzahl der Vorhersagen, die um mindestens 1 °C vom wahren Wert abweichen kann dadurch von 7% auf 0,8% gesenkt werden. Dass die Intervalle mit erfülltem Schwellenwert-Kriterium recht genau denjenigen mit grösserem Fehler entsprechen, ist gut in der Figur 6 ersichtlich, wo in der oberen Darstellung diejenigen Bereiche markiert sind, bei der die Vorhersage des Modells um mehr als 1 °C abweicht, während in der unteren Darstellung diejenigen Bereiche markiert sind, bei der das Schwellenwert-Kriterium erfüllt ist, also keine neuen Vorhersagen erzeugt werden.

Die Temperatursensoren und die Gateways sind so gesteuert, dass alle 30 Minuten während eines 1-minütigen Zeitraums Rohraussentemperaturdaten erfasst und zu einer Abschätzung für den Flüssigkeitstemperaturwert verarbeitet werden. Fällt ein solches 1-minütiges Zeitintervall in einen Bereich, in dem das Schwellenwert-Kriterium erfüllt ist, wird der Zeitschritt bis zur nächsten Messung reduziert, beispielsweise auf 5 min. So wird sichergestellt, dass jeweils nur kurzzeitig keine aktuelle Abschätzung vorliegt. Sobald wieder eine Abschätzung gewonnen werden konnte, wird der Zeitschritt wieder auf den Standardwert (hier 30 Minuten) zurückgesetzt.

Rohre aus unterschiedlichen Materialien, insbesondere Rohre aus Kunststoff und solche aus Metall, zeigen aufgrund der unterschiedlichen Wärmekapazität und -leitfähigkeit der Materialien ein unterschiedliches thermisches Verhalten. Es hat sich gezeigt, dass durch das Bereitstellen mehrerer Machine-Learning-Modelle für verschiedene Rohrmaterialien die Abschätzungen deutlich verbessert werden können.

Vorliegend werden in den Gateways zwei unterschiedliche Modelle vorgehalten und zwar jeweils eines pro Rohrtyp. Das Ausführungsbeispiel verfügt über Modell für folgende Rohrtypen: Kunststoff (PB) 16×2.2, Inox 28×1.2, Inox 42×1.5, Pexal (Mehrschichtverbundrohr) 16×2.2. Alle Modelle basieren auf LightGBM, weisen aber unterschiedliche Modellparameter auf, die sich aus den gesonderten Trainingsprozessen ergeben.

Damit die Installation vollständig automatisch ablaufen kann, führt ein Gateway bei einem erstmals mit ihr verbundenen Temperatursensor eine Materialerkennung durch. Dazu werden während einer Erkennungsphase Rohraussentemperaturwerte vom Temperatursensor empfangen, wobei der Empfang im Gegensatz zur oben erläuterten Betriebsphase mit einer höheren zeitlichen Auflösung erfolgt. Im beschriebenen Ausführungsbeispiel wird während der Erkennungsphase die Rohraussentemperatur mit einer zeitlichen Auflösung von 0.1 s erfasst. Werte während eines vorgegebenen Zeitintervalls werden zunächst lokal, auf dem Temperatursensor, gepuffert. Ebenfalls lokal wird die Änderungsrate der Rohraussentemperatur laufend berechnet. Übersteigt sie einen bestimmten Wert, werden die Werte aus dem Puffer zur Gateway übertragen. Wird der Wert während eines vorgegebenen Zeitraums unterschritten, stoppt die Übertragung. Sobald auf der Gateway eine ausreichend lange Zeitreihe (i. d. R. entsprechend einer Folge von Rohraussentemperaturmesswerten während mehrerer diskreter Intervalle) vorliegt, wird dort mithilfe eines Convoluted Neural Networks (CNN) eine Klassierung in eine Rohrklasse, vorliegend eine Zuordnung zu einem Rohrmaterial, vorgenommen.

Das CNN liefert einen Konfidenzwert für die Zuordnung. Übersteigt dieser eine untere Schwelle, wird der fragliche Temperatursensor der Rohrklasse definitiv zugeordnet und die Erkennungsphase beendet. Wird die Schwelle noch nicht überstiegen, wird die Erkennungsphase fortgeführt, d. h. die Zeitreihe mit weiteren Messergebnissen ergänzt.

Vorliegend wird ein CNN mit Dilatation verwendet, das 6 Schichten umfasst, eine Kernelgrösse von 5 und einer Dilatationsbasis von 3. Für die letzte Schicht wird ein Padding verwendet, da das rezeptive Feld etwas grösser ist als die Eingabe. Nach jeder Faltung erfolgt eine ReLU-Aktivierung und nach den Faltungsschichten eine vollständig verbundene Schicht mit Softmax-Aktivierung. Es ergibt sich folgende Struktur:

| **Schichttyp** | **Kernelgrösse** | **Dilatationsrate** | **Ausgabe** |
|---|---|---|---|
| Input | - | - | 1000 × 2 |
| 1D Convolution | 5 | 1 | 996 × 4 |
| 1D Convolution | 5 | 3 | 984 × 4 |
| 1D Convolution | 5 | 9 | 948 × 4 |
| 1D Convolution | 5 | 27 | 840 × 4 |
| 1D Convolution | 5 | 81 | 516 × 4 |
| 1D Convolution | 5 | 243 | 516 × 4 |
| Flatten | - | - | 2064 |
| Fully Connected | - | - | Rohrklasse |

Das Modell wurde anhand mehrerer Zeitreihen der Rohraussentemperatur mit Rohren der folgenden Typen trainiert: Kunststoff (PB) 16×2.2, Inox 28×1.2, Inox 42×1.5, Pexal (Mehrschichtverbundrohr) 16×2.2.

Nach Abschluss der Rohrerkennung wird der entsprechende Wert in dem Gateway dem Temperatursensor zugeordnet, und das Gateway und der Temperatursensor gehen in den ordentlichen Betrieb über. In diesem wird das zugeordnete Modell für die Abschätzung der Flüssigkeitstemperatur eingesetzt.

Bei Rohrleitungen, die in der Erkennungsphase aktiv genutzt werden, kann eine zuverlässige Erkennung bereits nach wenigen Stunden abgeschlossen sein. In anderen Rohrleitungen werden dazu unter Umständen einige Tage benötigt.

Falls das Gateway schon über Materialinformationen anderer Temperatursensoren verfügt, kann sie diese auch für neue Temperaturen einsetzen, beispielsweise indem auf Basis einer Korrelationsanalyse darauf geschlossen werden kann, dass sich der neue Temperatursensor in demselben Rohrabschnitt befindet wie ein vorhandener Temperatursensor mit bekannter Materialzuordnung.

Die Erfindung ist nicht auf das dargestellte Ausführungsbeispiel beschränkt. So können nebst den erfindungsgemässen Temperatursensoren mit Aussenrohrtemperaturmessung auch an sich bekannte «invasive» Temperatursensoren mit Sonde direkt im oder am Medium eingesetzt werden. Ein System mit zunächst invasiven Temperatursensoren kann auch nach und nach mit erfindungsgemässen Temperatursensoren ergänzt werden.

Das Machine-Learning-Modell zur Abschätzung der Flüssigkeitstemperatur anhand der Rohraussentemperatur und die dazu verwendeten Eingangsdaten können anders gewählt werden. Beispielsweise können nebst der Rohraussentemperatur auch Umgebungsdaten (Temperatur, Luftfeuchtigkeit) herangezogen werden.

Zusammenfassend ist festzustellen, dass die Erfindung eine Vorrichtung schafft, welche die engmaschige Erfassung und Überwachung von Wassertemperaturdaten vereinfacht und eine höhere Lebensdauer aufweist.

## Patentansprüche

1. Vorrichtung zur Bestimmung einer Temperatur einer in einer Rohrleitung geführten Flüssigkeit, insbesondere von Trinkwasser, umfassend:
a) ein Temperatursensorelement;
b) eine Halterung zur Anbringung an der Rohrleitung, wobei an der Halterung das Temperatursensorelement derart befestigt ist, dass es bei an der Rohrleitung angebrachter Halterung eine Aussenfläche der Rohrleitung kontaktiert, um Messdaten zur Aussentemperatur der Rohrleitung zu gewinnen;
c) eine Verarbeitungsanordnung zum Empfang der Messdaten des Temperatursensorelements und zur Ermittlung der Temperatur der in der Rohrleitung geführten Flüssigkeit, wobei die Verarbeitungsanordnung dazu eingerichtet ist, mithilfe eines Machine-Learning-Modells aus den Messdaten die Temperatur der Flüssigkeit zu bestimmen.

2. Vorrichtung nach Anspruch 1, **dadurch gekennzeichnet, dass** die Halterung einen flexiblen Abschnitt umfasst, der im angebrachten Zustand die Rohrleitung zumindest teilweise umgreift.

3. Vorrichtung nach Anspruch 1 oder 2, **dadurch gekennzeichnet, dass** sie eine erste Einheit zur Anbringung an der Rohrleitung aufweist, die das Temperatursensorelement und eine erste Schnittstelle zur Datenübermittlung umfasst und dass sie eine zweite, entfernt anordenbare, Einheit mit einer zweiten Schnittstelle zur Datenübermittlung und der Verarbeitungsanordnung umfasst, wobei die erste Einheit und die zweite Einheit so eingerichtet sind, dass die Messdaten des Temperatursensorelements von der ersten Einheit zur zweiten Einheit übertragbar sind.

4. Vorrichtung nach Anspruch 3, **dadurch gekennzeichnet, dass** die erste Schnittstelle und die zweite Schnittstelle zur drahtlosen Datenübertragung eingerichtet sind, insbesondere in einem Netzwerk des Typs Long Range Wide Area Network (LoRaWAN).

5. Vorrichtung nach einem der Ansprüche 1 bis 4, **dadurch gekennzeichnet, dass** das Machine-Learning-Modell aus folgenden Typen ausgewählt ist:
a) ein baumbasiertes Modell;
b) ein lineares Modell;
c) ein neuronales Netz.

6. Vorrichtung nach einem der Ansprüche 1 bis 5, **dadurch gekennzeichnet, dass** die Verarbeitungsanordnung dazu eingerichtet ist, im Machine-Learning-Modell die Messdaten zu einem aktuellen Zeitpunkt und in einem dem aktuellen Zeitpunkt vorangegangenen Intervall zur Bestimmung der Temperatur der Flüssigkeit zum aktuellen Zeitpunkt zu verarbeiten.

7. Vorrichtung nach einem der Ansprüche 1 bis 6, **dadurch gekennzeichnet, dass** die Verarbeitungsanordnung dazu eingerichtet ist, die Messdaten in beabstandeten Messzeiträumen zu gewinnen und zu übermitteln, wobei ein Abstand der Messzeiträume mindestens 10 mal grösser ist als eine Dauer der Messzeiträume.

8. Vorrichtung nach Anspruch 7, **dadurch gekennzeichnet, dass** die Verarbeitungsanordnung dazu eingerichtet ist, innerhalb jedes Messzeitraums Messdaten des Temperatursensorelements und/oder abgeleitete Daten zu verarbeiten, die zeitlich ungleich im Messzeitraum verteilten Messungen entsprechen, wobei eine zeitliche Dichte der Messungen in einem dem aktuellen Zeitpunkt näherliegenden Abschnitt des Messzeitraums höher ist als in einem dem aktuellen Zeitpunkt fernerliegenden Abschnitt des Messzeitraums.

9. Vorrichtung einem der Ansprüche 1 bis 8, **dadurch gekennzeichnet, dass** die Verarbeitungsanordnung dazu eingerichtet ist, im Machine-Learning-Modell nebst Messdaten, die der Aussentemperatur der Rohrleitung entsprechen, auch abgeleitete Daten zu verarbeiten, die einer ersten zeitlichen Ableitung der Messdaten entsprechen.

10. Vorrichtung nach Anspruch 9, **dadurch gekennzeichnet, dass** die Verarbeitungsanordnung dazu eingerichtet ist, im Machine-Learning-Modell zusätzlich abgeleitete Daten zu verarbeiten, die einer zweiten zeitlichen Ableitung der Messdaten entsprechen.

11. Vorrichtung nach einem der Ansprüche 1 bis 10, **gekennzeichnet durch** ein weiteres Temperatursensorelement zur Gewinnung von Umgebungstemperatur-Messdaten und **dadurch, dass** die Verarbeitungsanordnung dazu eingerichtet ist, im Machine-Learning-Modell zusätzlich Messdaten des weiteren Temperatursensorelements zu verarbeiten.

12. Vorrichtung nach einem der Ansprüche 1 bis 11, **dadurch gekennzeichnet, dass** die Verarbeitungsanordnung dazu eingerichtet ist, anhand der in einem ersten Zeitraum empfangenen Messdaten des Temperatursensorelements ein der Rohrleitung angepasstes Machine-Learning-Modell aus mindestens zwei Machine-Learning-Modellen auszuwählen und in einem zweiten Zeitraum das ausgewählte Machine-Learning-Modell zur Bestimmung der Temperatur der Flüssigkeit einzusetzen.

13. Vorrichtung nach Anspruch 12, **dadurch gekennzeichnet, dass** eine erste Datenübertragungsrate im ersten Zeitraum anders, insbesondere höher, gewählt wird als eine zweite Datenübertragungsrate im zweiten Zeitraum.

14. Vorrichtung nach einem der Ansprüche 1 bis 13, **dadurch gekennzeichnet, dass** die Verarbeitungsanordnung dazu eingerichtet ist, anhand einer Änderungsrate der Aussentemperatur der Rohrleitung ein Mass für die Verlässlichkeit der bestimmten Temperatur der Flüssigkeit zu ermitteln, wobei insbesondere neue Werte für die Temperatur der Flüssigkeit nur ausgegeben oder weitergegeben werden, wenn das Mass für die Verlässlichkeit einen unteren Schwellenwert übersteigt.

15. Vorrichtung nach Anspruch 14, **dadurch gekennzeichnet, dass** ein Zeitpunkt eines nächsten Messzeitraums angepasst wird, wenn das Mass den unteren Schwellenwert unterschreitet.

16. System zur Überwachung einer Temperatur einer in einem Rohrleitungssystem geführten Flüssigkeit, insbesondere von Trinkwasser, umfassend mehrere Vorrichtungen nach einem der Ansprüche 1 bis 15, die an beabstandeten Messpositionen am Rohrleitungssystem angeordnet sind, und eine zentrale Verarbeitungseinrichtung zur Verarbeitung von Werten der Temperatur der Flüssigkeit an den beabstandeten Messpositionen.

17. Verfahren zur Bestimmung einer Temperatur einer in einer Rohrleitung geführten Flüssigkeit, insbesondere von Trinkwasser, umfassend folgende Schritte:
a) Gewinnen von Messdaten eines Temperatursensorelements, das eine Aussenfläche der Rohrleitung kontaktiert;
b) Empfangen der Messdaten des Temperatursensorelements in einer Verarbeitungsanordnung und
c) Ermitteln der Temperatur der in der Rohrleitung geführten Flüssigkeit aus den Messdaten, mithilfe eines Machine-Learning-Modells.

18. Verfahren nach Anspruch 17, **gekennzeichnet durch** folgende weitere Schritte:
d) Vergleichen der ermittelten Temperatur der in der Rohrleitung geführten Flüssigkeit mit einem Sollbereich;
e) Generieren einer Warnung, wenn die ermittelte Temperatur ausserhalb des Sollbereiches liegt und/oder Generieren eines Nachweises, wenn die ermittelte Temperatur innerhalb des Sollbereiches liegt.

19. Verfahren nach Anspruch 17 oder 18, **dadurch gekennzeichnet, dass** ein elektronisch steuerbares Zirkulationsventil in Abhängigkeit der ermittelten Temperatur der in der Rohrleitung geführten Flüssigkeit gesteuert wird.
